# EUROPÄISCHE PATENTSCHRIFT

(11) **EP 3 585 586 B1**
(45) Veröffentlichungstag und Bekanntmachung des Hinweises auf die Patenterteilung: **19.05.2021**
(21) Anmeldenummer: 18704010.0
(22) Anmeldetag: 08.02.2018
(51) Int. Cl.: B29C 45/18, B29B 15/08, B29B 15/12, B29B 15/14, B29C 45/00, B29K 105/08

(54) **VERFAHREN UND VORRICHTUNG ZUR HERSTELLUNG VON FASERVERSTÄRKEN KUNSTSTOFF-FORMTEILEN**
METHOD AND DEVICE FOR PRODUCING FIBRE-REINFORCED PLASTIC MOULDINGS
PROCÉDÉ ET DISPOSITIF POUR LA FABRICATION DE PIÈCES MOULÉES EN MATIÈRE PLASTIQUE RENFORCÉES PAR DES FIBRES

(30) Priorität: 23.02.2017 DE 102017103757
(43) Veröffentlichungstag der Anmeldung: 01.01.2020
(73) Patentinhaber: KraussMaffei Technologies GmbH, 80997 München (DE)
(72) Erfinder: SCHADHAUSER, Maximilian, 82008 Unterhaching (DE)
(74) Vertreter: Wilhelm, Ludwig
(86) Internationale Anmeldenummer: PCT/EP2018/053193
(87) Internationale Veröffentlichungsnummer: WO 2018/153682

(56) Entgegenhaltungen:
- EP-A2- 0 979 719
- US-A- 5 094 883
- US-A- 5 213 843
- US-A- 5 370 911
- US-A1- 2004 231 598
- US-A1- 2010 103 763

## Beschreibung

Für die Herstellung von faserverstärkten Kunststoffprodukten ist es bekannt, endlose Faserstränge in einer Plastifiziereinrichtung in aufgeschmolzenes Kunststoffmaterial einzumischen und das so vermischte Material einer Formgebungseinrichtung zuzuführen. Bei der Formgebungseinrichtung kann es sich um ein Spritzgießwerkzeug oder um ein Extrusionswerkzeug handeln. Je nach Formgebungseinrichtung kann die Plastifiziereinrichtung verschieden ausgestaltet sein. Bei einem Spritzgießwerkzeug kann die Plastifiziereinrichtung beispielsweise als Doppelschneckenextruder mit axial nicht verschiebbaren Schnecken ausgestaltet sein, und das Material kann mittels einer nachgeschalteten Spritzeinheit in das Spritzgießwerkzeug eingebracht werden. Ebenso ist es bekannt eine Schneckenvorplastifizierung mit einer einzigen Schnecke vorzusehen und das Material mittels einer nachgeschalteten Spritzeinheit in das Spritzgießwerkzeug einzubringen. Dabei kann die Schnecke bei der Schneckenvorplastifizierung axial ortsfest sein oder aber auch als Schubschnecke ausgebildet sein. Im letztgenannten Fall sind sowohl ein Drehantrieb wie auch ein Linearantrieb vorgesehen. Bei einem Spritzgießwerkzeug kann die Plastifiziereinrichtung auch lediglich mit einer Schubschnecke ausgebildet sein, d.h. das Plastifizieren und das Einspritzen erfolgen mit ein- und derselben Schnecke. Bei einem Extrusionswerkzeug kann die Plastifiziereinrichtung als Einschnecken- oder als Mehrschneckenextruder, beispielsweise als Doppelschneckenextruder, ausgestaltet sein. Bekannte Plastifiziereinrichtungen aus den vorgenannten Arten sind beispielsweise offenbart in EP1144174B1, EP1306187B1 und DE423662C2.

Aus der US 5,094,883 ist es bekannt, ein Pulvermaterial auf Faserstränge aufzubringen. Die zu beschichtenden Faserstränge werden zunächst geerdet und dann durch ein Gehäuse geführt, in welchem diese Faserstränge einem Pulver-Luft-Gemisch ausgesetzt werden. Für die Erzeugung des Pulver-Luft-Gemischs kommt ein sogenanntes Wirbelbettverfahren zur Anwendung. In einem Gehäuse ist eine poröse Platte angeordnet, die in Schwingungen versetzt werden kann. Auf dieser Platte wird eine bestimmte Menge an Pulver abgelegt und bildet dort einen Pulvervorrat. Unterhalb der porösen Platte ist das Gehäuse an einen Kanal angeschlossen, durch welchen getrocknete Luft von unten in das Gehäuse eingeleitet werden kann. Unterhalb der porösen Platte ist ein Ionisator angeordnet, mit welchem die einströmende Luft ionisiert werden kann. Die ionisierte Luft wird durch die poröse Platte und durch das Pulver hindurch geleitet. Dabei wird Pulver von der porösen Platte abgehoben und bildet zusammen mit der ionisierten Luft ein Pulver-Luft-Gemisch in einem Abstand oberhalb der porösen Platte. Wird ein Faserstrang durch dieses Pulver-Luft-Gemisch hindurchbewegt, so lagert sich Pulver an dem Faserstrang an. Der Faserstrang wird anschließend durch einen Ofen hindurchbewegt, um das Pulver aufzuschmelzen und eine gute Haftung des Pulvers mit dem Faserstrang zu erzielen. So beschichtete Faserstränge werden abschließend einer Rolle zugeführt, wo die Faserstränge aufgewickelt werden und letztendlich ein Vorrat an beschichtetem Fasermaterial gebildet wird.

Das Dokument US 5 370 911 A offenbart ein Verfahren zum Beschichten von Fasersträngen, wobei ein Pulver aus einem Vorratsbehälter unter Verwendung einer Venturidüse angesaugt und mittels eines Luftstroms zu den zu beschichteten Fasersträngen gefördert wird. Die Pulverteilchen werden elektrostatisch aufgeladen, bevor sie auf die geerdeten Faserstränge auftreffen und bilden dort eine Beschichtung.

Das Dokument US 5 213 843 A offenbart ein weiteres Verfahren zum Beschichten von Fasersträngen mit einem Pulvermaterial. Hierbei wird Luft über die Fasereinlassöffnung unter Verwendung eines Vakuums in eine Beschichtungskammer eingesaugt und Pulver aus einem Vorratsbehälter wird in den Luftstrom eingegeben. Die Faserstränge können elektrostatisch aufgeladen in die Beschichtungskammer eingeführt werden.

Die US 2004/231598 A1 offenbart ebenfalls ein Verfahren zur Pulverbeschichtung von Fasern, wobei das Pulver in eine Venturidüse mittels eines ionisierten Luftstromes aus einem Vorratsbehälter angesaugt und dann über eine Düse auf den Faserstrang geblasen wird.

Aus der DE102014213320A1 ist es bekannt ein Werkstück mittels einer Spritzpistole mit einem Pulver zu beschichten (Absatz [0019]). Hierbei wird in einem Vorratsbehälter ein Pulver-Luft-Gemisch erzeugt, das sich wie eine Flüssigkeit verhält. Man sagt auch, dass das Pulver im Vorratsbehälter "fluidisiert" wird. Dieses fluidisierte Pulver fließt anschließend durch Schläuche oder Rohre zu Auftragsvorrichtungen wie beispielsweise eine Spritzpistole mit einer entsprechenden Düse. Um die Pulverpartikel elektrisch aufzuladen, ist eine Sprühelektrode vorgesehen. Das aufgeladene Pulver wird mittels der Spritzpistole versprüht und bleibt auf dem geerdeten Werkstück haften. Gemäß der DE1020142113320A1 kann es sich bei den zu beschichtenden Werkstücken um solche Werkstücke handeln, die im Wesentlichen, d.h. beispielsweise zu mindestens 50 Gewichtsprozent, vorzugsweise mindestens 75 Gewichtsprozent oder ausschließlich aus Kohlenstofffasern bestehen. Der Begriff "Kohlenstofffasern" erfasst einzelne Fasern oder Fäden, aber auch daraus gebildete Gewirke, Geflechte, Gestricke, Gewebe, Gelege oder dergleichen.

Bei den vorbekannten Pulverbeschichtungsverfahren kann das Pulver zwar vergleichsweise homogen auf Faserstränge aufgebracht werden. Nachteilig ist jedoch, dass die Schichtdicke bzw. der Pulvergehalt pro Mengeneinheit an Faserstrang (z.B. pro Kg an Faserstrang) nicht oder zumindest nicht exakt genug einstellbar ist. Dies würde sich nachteilig bei der direkten Verarbeitung von solchermaßen beschichtetem Fasermaterial zu einem Gemisch aus Kunststoffschmelze und Fasermaterial auswirken. Es könnten nämlich keine Formteile mit einem definierten Anteil an Schichtmaterial auf den eingearbeiteten Fasersträngen hergestellt werden.

Die Dokumente US 2010/103763 A1 und EP 0 979 719 A2 offenbaren jeweils ein Verfahren zum Herstellen von faserverstärkten Kunststoff-Formteilen mit den Merkmalen des Oberbegriffs von Anspruch 1 sowie eine Vorrichtung zur Durchführung des Verfahrens, umfassend eine Faserbeschichtungseinrichtung, eine Plastifiziereinrichtung mit einer Ein- oder einer Doppelschnecke sowie eine Formgebungseinrichtung.

Ausgehend hiervon liegt der Erfindung die Aufgabe zugrunde, ein Verfahren und eine Vorrichtung zum Herstellen von faserverstärkten Kunststoff-Formteilen anzugeben, wobei die Kunststoff-Formteile mit Fasern versetzt sind, die einen definierten Anteil an Beschichtungsmaterial aufweisen.

Die Lösung dieser Aufgabe erfolgt durch ein Verfahren mit den Merkmalen von Anspruch 1 und eine Vorrichtung mit den Merkmalen von Anspruch 5. Vorteilhafte Ausgestaltungen und Weiterentwicklungen finden sich in den abhängigen Ansprüchen.

Ein Kerngedanke der Erfindung kann darin gesehen werden, dass die Faserstränge mit einer definierten Menge an Pulver pro Zeiteinheit oder pro Faserlängeneinheit homogen beschichtet werden. Hierzu ist erfindungsgemäß vorgesehen, dass zum Beschichten der Faserstränge zunächst ein Luftstrom aus ionisierter Luft erzeugt und durch eine Venturidüse hindurch geleitet wird, dass Pulver aus einem Vorratsbehälter mittels eines Schneckenförderers entnommen und der Venturidüse zugeführt wird, dass sich in Strömungsrichtung hinter der Venturidüse ein Strom aus einem Pulver-Luft-Gemisch bildet und dieser Strom in eine Kammer eingeleitet wird, dass geerdete oder entgegengesetzt zum Pulver Ionisierte Faserstränge durch die Kammer hindurch und durch das durch die Kammer hindurchströmende Pulver-Luft-Gemisch hindurch verfahren werden, wobei Pulverteilchen auf den Fasersträngen abgelagert werden und die aus der Kammer herausgeführten Faserstränge auf diese Weise eine Beschichtung mit einer definierten Menge an Pulver pro Zeiteinheit oder pro Faserlängeneinheit aufweisen. Die so beschichteten Faserstränge werden einer Plastifzierzeinrichtung zugeführt, in welcher die Faserstränge von einer Einschnecke oder einer Doppelschnecke eingezogen und in ein aufgeschmolzenes Kunststoffmaterial eingearbeitet werden, wobei ein Gemisch aus Kunststoffschmelze und Fasermaterial erzeugt und dieses Gemisch einer Formgebungseinrichtung zugeführt wird. Die auf diese Art und Weise hergestellten faserverstärkten Kunststoff-Formteile zeichnen sich dadurch aus, dass die in dem Kunststoff-Formteil vorhandenen Fasern einen definierten Anteil an Beschichtungsmaterial aufweisen.

Erfindungsgemäß sind somit zwei Varianten vorgesehen, um eine ausreichende Haftung des Pulvermaterials auf den Fasersträngen zu erzielen. In der ersten Variante ist lediglich das Pulver ionisiert und das Fasermaterial geerdet. Falls eine höhere Haftung gewünscht wird oder erforderlich sein sollt, kann gemäß einer zweiten Variante vorgesehen werden, dass das Pulver positiv ionisiert wird und die Faserstränge negativ (oder umgekehrt).

Über die Auswahl des Beschichtungsmaterials können weitere Vorteile erzielt werden. Insbesondere wenn das Beschichtungsmaterial so gewählt wurde, dass die Viskosität des in der Plastifiziereinichtung aufgeschmolzenen Kunststoffs in der direkten Umgebung des zugeführten mit dem Beschichtungsmaterial versehenen Faserstrangs stark reduziert wird, kann die Benetzung der einzelnen mit Beschichtungsmaterial versehenen Filamente des Faserstrangs signifikant erleichtert werden. Konkret werden diese beschichteten Filamente direkt beim ersten Kontakt mit dem in der Plastifiziereinrichtung aufgeschmolzenen Kunststoffmaterial mit diesem Kunststoffmaterial imprägniert, bevor sie zu Agglomeraten kompaktiert werden könnten. Durch diese frühzeitige Vermeidung von Agglomeratbildung entfällt auch die Notwendigkeit, diese Agglomerate beispielsweise durch stark scherende Dispergierungszonen aufzuschließen. Der Entfall stark scherender Zonen wiederum führt zu einer höheren mittleren Faserlänge im Bauteil, die sich dann positiv in den mechanischen Eigenschaften wiederspiegelt.

Bevorzugt wird der Schneckenförderer unterfüttert betrieben. Im Zusammenwirken mit der Venturidüse und dem dort herrschenden Unterdruck wird ein abgeschlossenes System gebildet. Dies hat den Vorteil, dass die Kammer, in die die Pulverpartikel eindosiert werden, ausreichend Raum für ein turbulentes Strömungsprofil bildet, da der Raum nicht durch abgelagerte Pulverpartikel gefüllt ist. Das turbulente Strömungsprofil wiederum führt zu einem gleichmäßigen Auftrag des Pulvers auf sämtliche Oberflächen des durchgeführten Faserstrangs.

Vorzugsweise kann die Luft erhitzt werden, bevor sie durch die Venturidüse geleitet wird. Dies trägt dazu bei, dass die Luft bei der Bildung des Pulver-Luft-Gemischs möglichst trocken ist. Außerdem werden dadurch auch die Faserstränge erwärmt und infolgedessen erstarrt das in der Plastifiziereinrichtung aufgeschmolzene Kunststoffmaterial , in das die beschichteten Faserstränge eingeführt werden nicht beim Erstkontakt mit den Fasern. Entsprechend wird die Benetzung der Fasern verbessert.

Weiterhin kann es vorteilhaft sein, wenn die Luft auf eine Temperatur erhitzt wird, bei welcher die Pulverteilchen angeschmolzen werden. Dies ist je nach verwendetem Material bei Temperaturen von mehr oder weniger oberhalb 110°C der Fall.

Eine erfindungsgemäße Vorrichtung umfasst im Wesentlichen eine Faserbeschichtungseinrichtung, eine Plastifiziereinrichtung mit einer Ein- oder einer Doppelschnecke sowie eine Formgebungseinrichtung. Die Faserbeschichtungseinrichtung weist eine Kammer auf, durch welche Faserstränge hindurch verfahren werden können und durch welche ein Strom aus einem Pulver-Luft-Gemisch hindurch geleitet werden kann. Die erfindungsgemäße Vorrichtung zeichnet sich unter anderem dadurch aus, dass die Faserbeschichtungseinrichtung einen an die Kammer angeschlossenen und mit einer Venturidüse ausgestatteten Luftkanal aufweist, durch welchen ionisierte Luft der Venturidüse zu und durch diese hindurch geleitet werden kann, und ferner dadurch, dass die Faserbeschichtungseinrichtung einen Pulvervorratsbehälter mit einem Schneckenförderer aufweist, wobei das Austrittsende des Schneckenförderers derart angeordnet ist, dass von dem Schneckenförderer gefördertes Pulver in die Venturidüse einströmen und sich mit der ionisierten Luft vermischen kann, um einen Strom aus einem Pulver-Luft-Gemisch erzeugen zu können.

In einer bevorzugten Ausführungsform kann die Kammer auf ihrer Oberseite eine Membran aufweisen, welche luftdurchlässig ist, aber für das Pulver aus dem Pulvervorratsbehälter undurchlässig ist. Dies ist vorteilhaft, damit die für den gleichmäßigen Transport des Pulvers notwendige Luft aus der Kammer entweichen kann, gleichermaßen aber sichergestellt ist, dass die eindosierte Pulvermenge auch vollständig auf die Fasern aufgebracht ist und nicht in Teilen zusammen mit der Luft aus der Kammer austritt.

Vorzugsweise kann in dem Luftkanal eine Heizeinrichtung vorgesehen sein, welche in Strömungsrichtung vorzugsweise vor der Venturidüse in dem Luftkanal angeordnet ist. Dadurch kann die Luft getrocknet und erwärmt werden. Mit der Heizeinrichtung wird es möglich, die Luft auf eine Temperatur zu erhitzen, bei welcher die Pulverteilchen angeschmolzen werden. Dies verbessert die Haftung des Beschichtungsmaterials auf der Oberfläche der Faserstränge.

In vorteilhafter Weise kann eine geeignete, an sich bekannte lonisierungseinrichtung vorgesehen sein, um ionisierte Luft erzeugen und in den Luftkanal einleiten zu können. Dadurch erspart man sich den Einbau von Ionisierungseinrichtungen in dem Luftkanal selbst.

Als Formgebungseinrichtung kann ein Extrusionswerkzeug oder ein Spritzgießwerkzeug vorgesehen werden. Insbesondere kann als Spritzgießmaschine ein sogenannter Spritzgießcompounder mit einer Einschnecke oder einem gleichsinnig drehenden Doppelschneckenextruder vorgesehen sein.

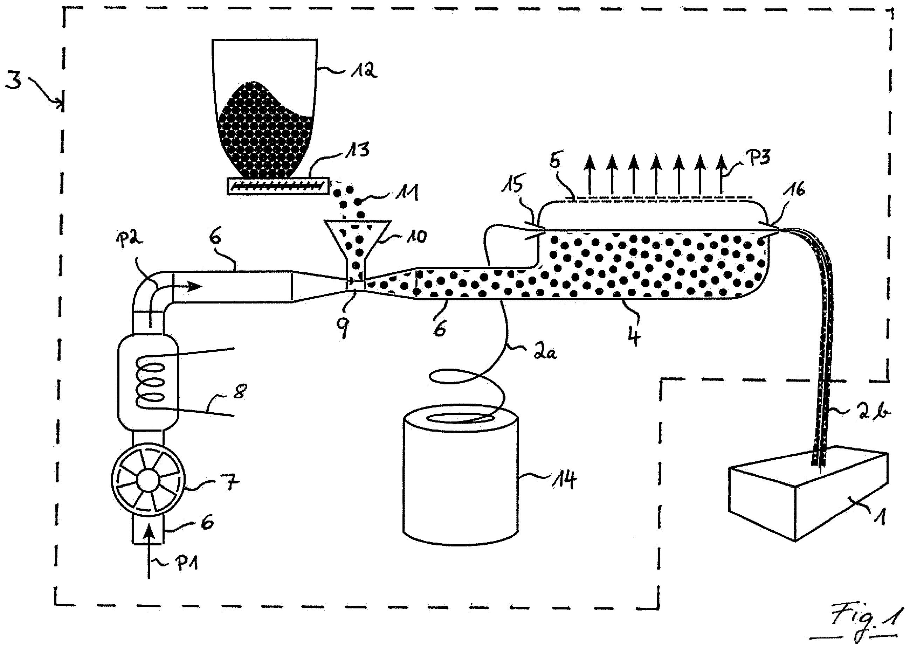

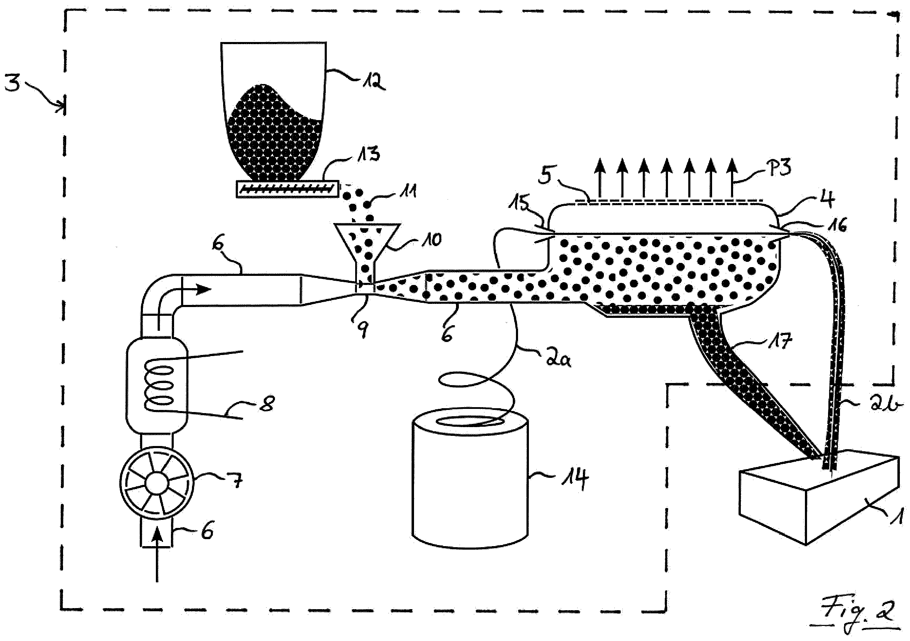

Nachfolgend soll die Erfindung anhand von Ausführungsbeispielen und unter Bezugnahme auf die Figuren 1 und 2 näher beschrieben werden.

Die Figur 1 zeigt schematisch den Aufbau einer erfindungsgemäßen Vorrichtung. Das Bezugszeichen 1 bezeichnet eine Spritzgießmaschine oder eine Extrusionsmaschine, wie sie jeweils sich für sich genommen bekannt sind (siehe z.B. EP1144174B1, EP1306187B1 oder DE4236662C2); daher kann eine nähere Beschreibung an dieser Stelle entfallen. Das Bezugszeichen 2b bezeichnet Faserstränge, welche schon beschichtet sind und der Plastifiziereinheit der Spritzgießmaschine oder der Extrusionsmaschine 1 zugeführt werden. Die insgesamt mit dem Bezugszeichen 3 versehende Faserbeschichtungseinrichtung umfasst im Wesentlichen eine Kammer 4, welche mit einer luftdurchlässigen Membran 5 abgeschlossen ist. An der Unterseite der Kammer 4 ist ein Luftkanal 6 angeschlossen. Der Luftkanal 6 ist mit mehreren Einrichtungen ausgestattet, nämlich einem Ventilator 7, einer Heizung 8 und einer Venturidüse 9. Auf der Oberseite der Venturidüse 9 ist ein Trichter 10 vorgesehen, durch welchen das als Pulver 11 vorliegende Beschichtungsmaterial in die Venturidüse 9 eingeleitet wird. Das Pulver 11 wird in einem Vorratsbehälter 12 bereitgehalten und über einen Schneckenförderer 13 aus dem Vorratsbehälter ausgetragen. Das Austrittsende des Schneckenförderers 13 ist derart angeordnet, dass von dem Schneckenförderer 13 gefördertes Pulver 11 in den Trichter 10 fallen und somit in die Venturidüse 9 einströmen und sich dort mit der ionisierten Luft vermischen kann. Stromabwärts von der Venturidüse 9 liegt somit ein Strom aus einem Pulver-Luft-Gemisch vor. Nicht dargestellt ist eine an sich bekannte Einrichtung zur Ionisierung von Luft. Mit dem Pfeil P1 soll lediglich angedeutet werden, dass Luft in den Kanal 6 eingeleitet wird, die zuvor ionisiert worden ist. Bei dem Pfeil P2 hat die Luft bereits die Heizung 8 passiert und ist entsprechend erwärmt.

Unbeschichtete Faserstränge 2a werden auf einer Vorratsrolle 14 oder dergleichen bereitgehalten und von dort abgezogen. Das Abziehen erfolgt mittels der Schnecke bzw. der Schnecken der Plastifiziereinrichtung in der Maschine 1. Die Faserstränge 2a sollten geerdet sein. Die Kammer 4 verfügt über geeignete Ein- und Austrittseinrichtungen 15, 16, um die Faserstränge 2a möglichst reibungsfrei in das Innere der Kammer 4 einziehen und um die beschichteten Faserstränge 2b aus der Kammer 4 herausführen zu können. Insbesondere können diese Ein- und Austrittseinrichtungen trichterförmig ausgestaltet sein, wie dies in der Figur 1 angedeutet ist.

Die Arbeitsweise der erfindungsgemäßen Vorrichtung ist wie folgt. Ionisierte Luft wird - wie mit dem Pfeil P1 angedeutet mittels des Ventilators 7 in den Luftkanal 6 angesaugt, von der Heizeinrichtung 8 erwärmt und durch die Venturidüse 9 geleitet. Aus dem Vorratsbehälter 12 wird mittels des Schneckenförderers 13 im unterfütterten Betrieb eine genau abgemessene Menge an Pulver pro Zeiteinheit in den Trichter 10 und damit in die Venturidüse 9 eingeleitet. Der Luftstrom in dem Luftkanal 6 wird somit mit einer genau abgemessenen Menge an Pulver pro Zeiteinheit versetzt und das Pulver wird von der ionisierten Luft aufgeladen. Dieses Pulver-Luft-Gemisch strömt weiter durch den Luftkanal 6 und gelangt an der Unterseite der Kammer 4 in diese hinein. Wie mit den Pfeilen P3 angedeutet, wird die Luft über die Membran 5 ins Freie abgeführt. Die Faserstränge werden quer durch die Kammer 4 hindurchgeführt, wobei eine im wesentlichen horizontale Lage der Faserstränge bevorzugt wird. Die Strömungsrichtung des Pulver-Luft-Gemischs ist im Wesentlichen vertikal ausgerichtet. Während die Faserstränge durch die Kammer 4 hindurchbewegt werden, werden sie kontinuierlich dem Pulver-Luft-Gemisch ausgesetzt und das aufgeladene Pulver kann sich an den geerdeten Fasersträngen ablagern. Dabei wird eine genau abgemessene Menge an Pulver pro Zeiteinheit auf die Faserstränge aufgetragen. Die auf diese Weise beschichteten Faserstränge 2b werden der Plastifiziereinrichtung der Maschine 1 zugeführt bzw. von dieser eingezogen und in ein aufgeschmolzenes Kunststoffmaterial eingearbeitet. Auf diese Weise wird ein Gemisch aus Kunststoffschmelze und Fasermaterial erzeugt und dieses Gemisch wird nachfolgend einer Formgebungseinrichtung zugeführt.

Die Figur 2 unterscheidet sich von der Figur 1 dahingehend, dass bei dieser Variante am Boden der Kammer 4 ein Anschluss für ein Rohr 17 vorgesehen ist, welches sich bis zur Plastifiziereinrichtung der Maschine 1 erstreckt. Dadurch können Pulverablagerungen am Boden der Kammer 4 über das Rohr 17 in die Fasereinzugsöffnung der Plastifziereinrichtung der Maschine 1 gefördert werden. Dies hat den Vorteil, dass mögliche Ablagerungen von Pulvermaterial am Boden der Kammer 4 verhindert werden können. Somit kann sichergestellt werden, dass sich eine exakt gewünschte Menge an Pulver 11 im fertig geformten faserverstärkten Kunststoffformteil befindet. Die Menge an Pulver 11 in diesem Kunststoffformteil setzt sich dann zusammen aus Pulver 11 bzw. Pulvermaterial, das als Beschichtungsmaterial auf den Fasern des beschichteten Faserstrangs 2b vorliegt und Pulver 11 bzs. Pulvermaterial, das direkt in aufgeschmolzenes Kunststoffmaterial eingemischt worden ist und sozusagen zwischen den beschichteten Fasern in dem Kunstsottformteil verteilt vorliegen. Der Austritt von Luft aus dieser zusätzlichen Öffnung in der Kammer 4 könnte auf ein Minimum reduziert werden, wenn das Rohr einen sehr dünnen Fließquerschnitt, aber eine große Länge aufweist.

### Bezugszeichenliste

| | |
|---|---|
| 1 | Spritzgieß- oder Extrusionsmaschine |
| 2a | Faserstränge - unbeschichtet |
| 2b | Faserstränge - beschichtet |
| 3 | Faserbeschichtungseinrichtung |
| 4 | Kammer |
| 5 | Membran |
| 6 | Luftkanal |
| 7 | Ventilator |
| 8 | Heizung |
| 9 | Venturidüse |
| 10 | Trichter |
| 11 | Pulver |
| 12 | Vorratsbehälter |
| 13 | Schneckenförderer |
| 14 | Faserrolle |
| 15 | Faser-Eintrittseinrichtung |
| 16 | Faser-Austrittseinrichtung |
| 17 | Rohr |

## Patentansprüche

1. Verfahren zum Herstellen von faserverstärkten Kunststoff-Formteilen, wobei Faserstränge (2a, 2b) beschichtet und einer Plastifiziereinrichtung zugeführt werden, in welcher die Faserstränge (2b) von einer Einschnecke oder einer Doppelschnecke eingezogen und in ein aufgeschmolzenes Kunststoffmaterial eingearbeitet werden, wobei ein Gemisch aus Kunststoffschmelze und Fasermaterial erzeugt und dieses Gemisch einer Formgebungseinrichtung zugeführt wird,
**dadurch gekennzeichnet,**
**dass** zum Beschichten der Faserstränge (2a) zunächst ein Luftstrom aus ionisierter Luft erzeugt und durch eine Venturidüse (9) hindurch geleitet wird, dass Pulver (11) aus einem Vorratsbehälter (12) mittels eines Schneckenförderers (13) entnommen und der Venturidüse (9) zugeführt wird, dass sich in Strömungsrichtung hinter der Venturidüse (9) ein Strom aus einem Pulver-Luft-Gemisch bildet und dieser Strom in eine Kammer (4) eingeleitet wird, dass geerdete oder entgegengesetzt zum Pulver Ionisierte Faserstränge (2a) durch die Kammer (4) hindurch und durch das durch die Kammer (4) hindurchströmende Pulver-Luft-Gemisch hindurch verfahren werden, wobei Pulverteilchen (11) auf den Fasersträngen (2a) abgelagert werden und die aus der Kammer (4) herausgeführten Faserstränge (2b) eine Beschichtung aufweisen, und dass die so beschichteten Faserstränge (2b) der Plastifzierzeinrichtung zugeführt werden.

2. Verfahren nach Anspruch 1,
**dadurch gekennzeichnet, dass**
der Schneckenförderer (13) unterfüttert betrieben wird.

3. Verfahren nach Anspruch 1 oder 2,
**dadurch gekennzeichnet, dass**
die Luft erhitzt wird, bevor sie durch die Venturidüse (9) geleitet wird.

4. Verfahren nach Anspruch 3,
**dadurch gekennzeichnet, dass**
die Luft auf eine Temperatur erhitzt wird, bei welcher die Pulverteilchen angeschmolzen werden.

5. Vorrichtung zur Durchführung des Verfahrens nach einem der vorstehenden Ansprüche, umfassend eine Faserbeschichtungseinrichtung (3), eine Plastifiziereinrichtung mit einer Ein- oder einer Doppelschnecke sowie eine Formgebungseinrichtung,
**dadurch gekennzeichnet,**
**dass** die Faserbeschichtungseinrichtung (3) eine Kammer (4) aufweist, durch welche Faserstränge (2a) hindurch verfahren werden können und durch welche ein Strom aus einem Pulver-Luft-Gemisch hindurch geleitet werden kann, dass die Faserbeschichtungseinrichtung (3) des Weiteren einen an die Kammer (4) angeschlossenen und mit einer Venturidüse (9) ausgestatteten Luftkanal (6) aufweist, durch welchen ionisierte Luft der Venturidüse (9) zu und durch diese hindurch geleitet werden kann, und dass die Faserbeschichtungseinrichtung (3) einen Pulvervorratsbehälter (12) mit einem Schneckenförderer (13) aufweist, wobei das Austrittsende des Schneckenförderers (13) derart angeordnet ist, dass von dem Schneckenförderer (13) gefördertes Pulver (11) in die Venturidüse (9) einströmen und sich mit der ionisierten Luft vermischen kann, um einen Strom aus einem Pulver-Luft-Gemisch erzeugen zu können.

6. Vorrichtung nach Anspruch 5,
**dadurch gekennzeichnet, dass**
die Kammer (4) auf ihrer Oberseite eine Membran (5) aufweist, welche luftdurchlässig ist, aber für das Pulver (11) aus dem Pulvervorratsbehälter (12) undurchlässig ist.

7. Vorrichtung nach einem der Ansprüche 5 bis 6,
**dadurch gekennzeichnet, dass**
in oder an dem Luftkanal (6) eine Heizeinrichtung (8) vorgesehen ist, welche in Strömungsrichtung vorzugsweise vor der Venturidüse (9) angeordnet ist.

8. Vorrichtung nach einem der Ansprüche 5 bis 7,
**dadurch gekennzeichnet, dass**
eine lonisierungseinrichtung vorgesehen ist, um ionisierte Luft erzeugen zu können.

9. Vorrichtung nach einem der Ansprüche 5 bis 8,
**dadurch gekennzeichnet, dass**
die Formgebungseinrichtung ein Extrusionswerkzeug oder ein Spritzgießwerkzeug aufweist.

10. Vorrichtung nach einem der Ansprüche 5 bis 9,
**dadurch gekennzeichnet, dass**
ein Rohr (17) vorgesehen ist, von dem das eine Ende am Boden der Kammer (4) angebracht ist und von dem das gegenüberliegende Ende in eine Öffnung der Plastifiziereinrichtung, vorzugsweise in die Fasereinzugsöffnung, mündet.

## Claims

1. A method for producing fibre-reinforced plastic mouldings, wherein fibre strands (2a, 2b) are coated and fed to a plasticizing device in which the fibre strands (2b) are drawn in by a single screw or a double screw and incorporated into a molten plastic material, wherein a mixture of plastic melt and fibre material is produced and this mixture is fed to a shaping device,
**characterized in that**
for coating the fibre strands (2a) initially an air stream of ionized air is produced and guided through a Venturi nozzle (9), that powder (11) is removed from a storage container (12) by means of a screw conveyor (13) and fed to the Venturi nozzle (9), that a stream of a powder-air mixture forms in the direction of flow behind the Venturi nozzle and this stream is introduced into a chamber (4), that fibre strands (2a) that are earthed or ionized opposite to the powder are passed through the chamber (4) and through the powder-air mixture flowing through the chamber (4), wherein powder particles (11) are deposited on the fibre strands (2a) and the fibre strands (2b) guided out of the chamber (4) have a coating and that the fibre strands (2b) thus coated are fed to the plasticizing device.

2. The method according to Claim 1,
**characterized in that**
the screw conveyor (13) is operated in an underfed manner.

3. The method according to Claim 1 or 2,
**characterized in that**
the air is heated before it is guided through the Venturi nozzle (9).

4. The method according to Claim 3,
**characterized in that**
the air is heated to a temperature at which the powder particles become melted.

5. A device for carrying out the method according to one of the above claims, comprising a fibre coating device (3), a plasticizing device having a single or a double screw as well as a shaping device,
**characterized in that**
the fibre coating device (3) has a chamber (4) through which fibre strands (2a) can be passed and through which a stream of a powder-air mixture can be guided, that the fibre coating device (3) furthermore has an air channel (6) connected to the chamber (4) and equipped with a Venturi nozzle (9) through which ionized air can be guided to and through the Venturi nozzle (9), and that the fibre coating device (3) has a powder storage container (12) with a screw conveyor (13), wherein the outlet end of the screw conveyor (13) is arranged in such a manner that powder (11) conveyed by the screw conveyor (13) can flow into the Venturi nozzle (9) and mix with the ionized air in order to be able to produce a stream of a powder-air mixture.

6. The device according to Claim 5,
**characterized in that**
the chamber (4) has a membrane (5) on its upper side, which is air-permeable but is impermeable for the powder (11) from the powder storage container (12).

7. The device according to one of Claims 5 to 6,
**characterized in that**
in or on the air channel (6) a heating device (8) is provided which is arranged preferably before the Venturi nozzle (9) in the flow direction.

8. The device according to one of Claims 5 to 7,
**characterized in that**
an ionizing device is provided in order to be able to produce ionized air.

9. The device according to one of Claims 5 to 8,
**characterized in that**
the shaping device comprises an extrusion tool or an injection moulding tool.

10. The device according to one of Claims 5 to 9,
**characterized in that**
a tube (17) is provided, of which one end is mounted on the base of the chamber (4) and of which the opposite end opens into an opening of the plasticizing device, preferably into the fibre intake opening.

## Revendications

1. Procédé pour la fabrication de pièces moulées en matière plastique renforcées par des fibres, dans lequel des faisceaux de fibres (2a, 2b) sont revêtus et dirigés vers un dispositif de plastification, dans lequel les faisceaux de fibres (2b) sont passés par une vis sans fin unique ou une vis sans fin double et usinés en un matériau plastique fondu, dans lequel un mélange de fonte de plastique et de matériau de fibres est produit et ce mélange est dirigé vers un dispositif de moulage,
**caractérisé en ce que**
pour revêtir les faisceaux de fibres (2a), un écoulement d'air constitué d'air ionisé est d'abord produit puis dirigé au travers d'un tube de venturi (9), que de la poudre (11) est prélevée d'un réservoir (12) au moyen d'un convoyeur à vis sans fin (13) puis dirigée vers le tube de venturi (9), qu'un écoulement constitué d'un mélange poudre-air se forme derrière le tube de venturi (9) dans le sens d'écoulement et cet écoulement est introduit dans une chambre (4), que des faisceaux de fibres (2a) mis à la terre ou ionisés inversement à la poudre sont amenés au travers de la chambre (4) et au travers du mélange poudre-air traversant la chambre (4), dans lequel des particules de poudre (11) sont déposées sur les faisceaux de fibres (2a) et les faisceaux de fibres (2b) sortis de la chambre (4) présentent un revêtement et que les faisceaux de fibres (2b) ainsi revêtus sont dirigés vers le dispositif de plastification.

2. Procédé selon la revendication 1,
**caractérisé en ce que**
le transporteur à vis sans fin (13) est entraîné sous-alimenté.

3. Procédé selon la revendication 1 ou 2,
**caractérisé en ce que**
l'air est chauffé avant qu'il ne soit dirigé à travers le tube de venturi (9).

4. Procédé selon la revendication 3,
**caractérisé en ce que**
l'air est chauffé à une température à laquelle les particules de poudre sont fondues.

5. Dispositif pour exécuter le procédé selon l'une des revendications précédentes, comprenant un dispositif de revêtement de fibres (3), un dispositif de plastification avec une vis sans fin unique ou une vis sans fin double ainsi qu'un dispositif de moulage,
**caractérisé en ce que**
le dispositif de revêtement de fibres (3) présente une chambre (4) à travers laquelle des faisceaux de fibres (2a) peuvent être dirigés et à travers laquelle un écoulement constitué d'un mélange poudre-air peut être dirigé, que le dispositif de revêtement de fibres (3) présente en outre un canal d'air (6) raccordé à la chambre (4) et doté d'un tube de venturi (9), à travers lequel de l'air ionisé peut être dirigé vers le tube de venturi (9) et peut être dirigé à travers celui-ci, et que le dispositif de revêtement de fibres (3) présente un réservoir de poudre (12) avec un convoyeur à vis sans fin (13), dans lequel l'extrémité de sortie du convoyeur à vis sans fin (13) est ainsi agencée que de la poudre (11) transportée par le convoyeur à vis sans fin (13) peut pénétrer dans le tube de venturi (9) et peut se mélanger à l'air ionisé pour produire un écoulement constitué d'un mélange poudre-air.

6. Dispositif selon la revendication 5,
**caractérisé en ce que**
la chambre (4) présente une membrane (5) sur sa face supérieure, laquelle est perméable à l'air, mais est imperméable à la poudre (11) sortant du réservoir de poudre (12).

7. Dispositif selon la revendication 5 à 6,
**caractérisé en ce qu'**
un dispositif de chauffage (8) est prévu dans ou sur le canal d'air (6), lequel est disposé de préférence avant le tube de venturi (9) dans le sens d'écoulement.

8. Dispositif selon l'une des revendications 5 à 7,
**caractérisé en ce qu'**
un dispositif d'ionisation est prévu pour pouvoir produire de l'air ionisé.

9. Dispositif selon l'une des revendications 5 à 8,
**caractérisé en ce que**
le dispositif de moulage présente un outil d'extrusion ou un outil de moulage par injection.

10. Dispositif selon l'une des revendications 5 à 9,
**caractérisé en ce qu'**
un tube (17) est prévu, dont l'une extrémité est posée sur le fond de la chambre (4) et dont l'autre extrémité opposée débouche dans une ouverture du dispositif de plastification, de préférence dans l'ouverture de passage des fibres.
